# EUROPEAN PATENT APPLICATION

(11) **EP 4 692 240 A1**
(43) Date of publication of application: **11.02.2026**
(21) Application number: 24780200.2
(22) Date of filing: 25.03.2024
(51) Int. Cl.: C08L 77/06, C08K 5/5465

(54) **RESIN COMPOSITION, MOLDED BODY, AND METHOD FOR PRODUCING RESIN COMPOSITION**

(30) Priority: 28.03.2023 JP 2023052088
(71) Applicant: Sumitomo Chemical Company, Limited, Tokyo 103-6020 (JP)
(72) Inventor: NOJIMA, Shiki, Ichihara-shi Chiba 299-0195 (JP)
(74) Representative: Vossius & Partner Patentanwälte Rechtsanwälte mbB
(86) International application number: PCT/JP2024/011733
(87) International publication number: WO 2024/204083

(57) **Abstract**

A resin composition containing a resin obtained by adding a carbodiimide to a semi-aromatic polyamide, wherein the semi-aromatic polyamide is a semi-aromatic polyamide having a structural unit represented by the following formula (1) and 0.05 parts by mass or more and 0.5 parts by mass or less of the carbodiimide is added based on 100 parts by mass of the semi-aromatic polyamide in the resin composition. In formula (1), Ar¹ represents a phenylene group or a naphthylene group, and p is an integer of 4 to 12.

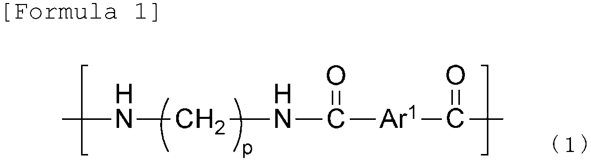

## Description

### Technical Field

The present invention relates to a resin composition, a molded body, and a method for producing a resin composition.

The present application claims priority based on Japanese Patent Application No. 2023-052088 filed in Japan on March 28, 2023, the content of which is incorporated herein by reference in its entirety.

### Background Art

A polyamide is known to have excellent wear resistance and strength, and is utilized as a material for a mechanical component and the like. In addition, an aliphatic polyamide having excellent wear resistance and strength among the polyamide has been widely used in the past.

However, the aliphatic polyamide has high water absorbency and therefore has a problem of being inferior in dimensional stability, and a semi-aromatic polyamide having low water absorbency has been developed in recent years and applications thereof have been studied. For example, an example in Patent Literature 1 discloses a polyamide resin composition obtained by adding about more than 0.5 parts by mass of a particular aliphatic carbodiimide based on 100 parts by mass of a particular semi-aromatic polyamide resin, and the LLC (long life coolant, cooling water for automobiles) resistance is evaluated as a kind of waterproofness.

### Citation List

### Patent Literature

Patent Literature 1: Japanese Patent Laid-Open No. 2006-176597

### Summary of Invention

### Problems to be Solved by Invention

However, there is still room for further studies on improvements in the toughness and durability of a resin composition containing a semi-aromatic polyamide, when, for example, the resin composition is applied to a use of a mechanical component such as a gear and in other cases.

The present invention has been made in order to solve the problem as described above, and an object of the present invention is to provide a resin composition that contains a semi-aromatic polyamide and makes it possible to produce a molded body having improved toughness and durability, and a molded body of the resin composition.

### Means to Solve the Problems

The present inventors have conducted diligent studies to solve the problem and have found that the toughness and durability are improved in a molded body of a resin composition containing a resin obtained by adding a predetermined amount of a carbodiimide to a semi-aromatic polyamide, and have completed the present invention.

That is, the present invention has the following modes.
<1> A resin composition comprising a resin obtained by adding a carbodiimide to a semi-aromatic polyamide,
   wherein the semi-aromatic polyamide is a semi-aromatic polyamide having a structural unit represented by the following formula (1),
   0.05 parts by mass or more and 0.5 parts by mass or less of the carbodiimide is added based on 100 parts by mass of the semi-aromatic polyamide in the resin composition: 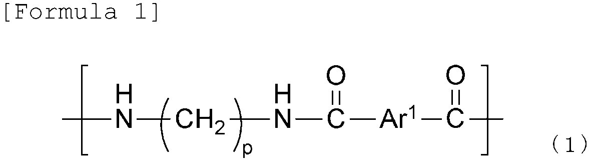
   wherein Ar¹ represents a phenylene group or a naphthylene group, a plurality of Ar¹s of the semi-aromatic polyamide are the same as or different from one another, and p is an integer of 4 to 12.
<2> The resin composition according to <1>, wherein the carbodiimide is an aliphatic polycarbodiimide.
<3> The resin composition according to <1> or <2>, wherein in formula (1), Ar¹ represents a 1,4-phenylene group and p is 10.
<4> The resin composition according to any one of <1> to <3>, wherein the semi-aromatic polyamide has a melt mass flow rate (MFR) of 150 g/10 min or less, as measured in accordance with JIS K 7210 at a test temperature of 330°C with a load of 2160 g.
<5> The resin composition according to any one of <1> to <4>, wherein the carbodiimide has a carbodiimide group equivalent of 100 g/mol or more and 1000 g/mol or less.
<6> The resin composition according to any one of <1> to <5>, being a resin composition for molding a gear, to be used as a molding material for a gear.
<7> A molded body comprising the resin composition according to any one of <1> to <6>.
<8> A method for producing the resin composition according to any one of <1> to <6>, the method comprising mixing a semi-aromatic polyamide and a carbodiimide,
   wherein the semi-aromatic polyamide is a semi-aromatic polyamide having a structural unit represented by the following formula (1); and
   an amount of the carbodiimide blended is 0.05 parts by mass or more and 0.5 parts by mass or less based on 100 parts by mass of the semi-aromatic polyamide in the resin composition: 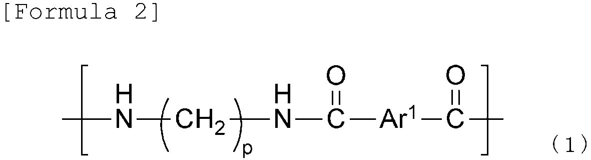
   wherein Ar¹ represents a phenylene group or a naphthylene group, a plurality of Ar¹s of the semi-aromatic polyamide are the same as or different from one another, and p is an integer of 4 to 12.
<9> Use of the resin composition according to any one of <1> to <5> for molding a gear.
<10> Use of the resin composition according to any one of <1> to <5> for producing a molding material for a gear.

### Effects of Invention

According to the present invention, it is possible to provide a resin composition that contains a semi-aromatic polyamide and makes it possible to produce a molded body having improved toughness and durability, and a molded body of the resin composition.

### Embodiments for Carrying out Invention

Hereinafter, embodiments of a resin composition, a molded body, and a method for producing a resin composition of the present invention will be described.

### <<Resin composition>>

The resin composition of an embodiment is a resin composition containing a resin obtained by adding a carbodiimide to a semi-aromatic polyamide, wherein the semi-aromatic polyamide is a semi-aromatic polyamide having a structural unit represented by the following formula (1), and 0.05 parts by mass or more and 0.5 parts by mass or less of the carbodiimide is added based on 100 parts by mass of the semi-aromatic polyamide in the resin composition. 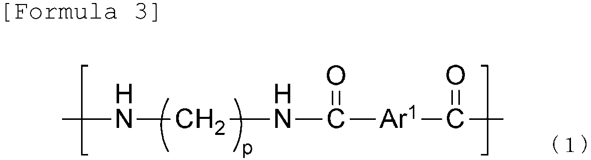 wherein Ar¹ represents a phenylene group or a naphthylene group, a plurality of Ar¹s of the semi-aromatic polyamide are the same as or different from one another, and p is an integer of 4 to 12.

The molded body of the resin composition of the embodiment containing a resin obtained by adding the above predetermined amount of the carbodiimide to the semi-aromatic polyamide has improved toughness that is evaluated by tensile energy to break as an index and improved durability that is evaluated by a fatigue test, as compared with a molded body of a resin composition in which the carbodiimide is not added.

As shown in Examples, which will be described later, such improvements in toughness and durability are not confirmed when an aliphatic polyamide in place of the semi-aromatic polyamide is contained.

In addition, as shown in Examples, which will be described later, when the carbodiimide is added within a range of 0.05 parts by mass or more and 0.5 parts by mass or less based on 100 parts by mass of the semi-aromatic polyamide, the extent of the improvements in toughness and durability of the above molded body is satisfactory.

Accordingly, when a particular amount of the carbodiimide is added in a particular combination of the carbodiimide and the semi-aromatic polyamide, thereby the toughness and durability of the above molded body are improved satisfactorily.

In the resin composition of an embodiment, the carbodiimide is added in an amount of 0.05 parts by mass or more, preferably 0.1 parts by mass or more, more preferably 0.15 parts by mass or more, more preferably 0.2 parts by mass or more, and even more preferably 0.3 parts by mass or more, based on 100 parts by mass of the semi-aromatic polyamide.

In the resin composition of an embodiment, the carbodiimide is added in an amount of 0.5 parts by mass or less, preferably less than 0.5 parts by mass, more preferably 0.45 parts by mass or less, and even more preferably 0.4 parts by mass or less, based on 100 parts by mass of the semi-aromatic polyamide.

The above-exemplified upper limit values and lower limit values of the amount of the carbodiimide to be added may be freely combined.

In the resin composition of an embodiment, the amount of the carbodiimide to be added is 0.05 parts by mass or more and 0.5 parts by mass or less, may be 0.1 parts by mass or more and less than 0.5 parts by mass, may be 0.15 parts by mass or more and 0.45 parts by mass or less, may be 0.2 parts by mass or more and 0.4 parts by mass or less, or may be 0.3 parts by mass or more and 0.4 parts by mass or less, based on 100 parts by mass of the semi-aromatic polyamide.

The resin composition of an embodiment can be obtained in such a way that the semi-aromatic polyamide, the carbodiimide, and the above other optional components to be used as necessary are blended so that the total of the contents (% by mass) thereof in the resin composition does not exceed 100% by mass based on the total mass of the resin composition.

Hereinafter, the semi-aromatic polyamide and carbodiimide that are blended in the resin composition of an embodiment will be described.

Note that the resin composition of an embodiment may contain the semi-aromatic polyamide and the carbodiimide in the form of a reaction product thereof.

### <Semi-aromatic polyamide>

The semi-aromatic polyamide contained in the resin composition of the present embodiment is a semi-aromatic polyamide having a structural unit represented by the following formula (1). 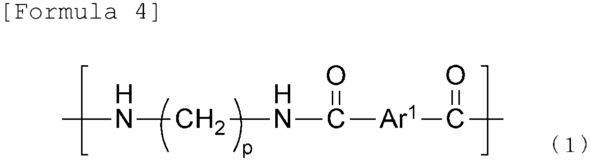 wherein Ar¹ represents a phenylene group or a naphthylene group, a plurality of Ar¹s of the semi-aromatic polyamide are the same as or different from one another, and p is an integer of 4 to 12.

The semi-aromatic polyamide contained in the resin composition of an embodiment can be obtained as a polymerized product of an aliphatic diamine and an aromatic dicarboxylic acid.

The aliphatic diamine may be an aliphatic diamine having 4 to 12 carbon atoms. Examples of the aliphatic diamine having 4 to 12 carbon atoms include 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine. These may be used singly or in combinations of two or more.

Examples of the aromatic dicarboxylic acid include terephthalic acid, phthalic acid, isophthalic acid, and naphthalene dicarboxylic acid. These may be used singly or in combinations of two or more.

From the viewpoint that a molded body to be obtained has excellent heat resistance, more preferably, Ar¹ in the above formula (1) represents a phenylene group or a naphthylene group, and a plurality of Ar¹s of the semi-aromatic polyamide are the same as or different from one another, and from the viewpoint that a molded body to be obtained has more excellent low water absorbency, p may be 9 or 10.

From the viewpoint that a molded body to be obtained has even more excellent heat resistance, even more preferably, Ar¹ in the above formula (1) represents a phenylene group or a naphthylene group, and a plurality of Ar¹s of the semi-aromatic polyamide are the same as or different from one another, and from the viewpoint that the effect of improving the toughness and durability due to the addition of carbodiimide is even more excellent and a molded body to be obtained has even more excellent low water absorbency, p may be 10.

Examples of the phenylene group as Ar¹ include a 1,4-phenylene group and a 1,3-phenylene group. Examples of the naphthylene group as Ar¹ include a 2,6-naphthylene group and a 2,7-naphthylene group.

Preferably, in the above formula (1), Ar¹ represents a 1,4-phenylene group, and p may be an integer of 4 to 12.

More preferably, in the above formula (1), Ar¹ represents a 1,4-phenylene group, and p may be 9 or 10.

Particularly preferably, in the above formula (1), Ar¹ represents a 1,4-phenylene group, and p may be 10.

In the polyamide, the content of the structural unit represented by the above formula (1) is preferably 40% or more, more preferably 80% or more, and even more preferably 90% or more, based on the total number of units (100%) of all the structural units in the polyamide.

In the polyamide, the content of the structural unit represented by the above formula (1) wherein Ar¹ represents a phenylene group or a naphthylene group, a plurality of Ar¹s of the semi-aromatic polyamide are the same as or different from one another, and p is 9 or 10 is preferably 40% or more, more preferably 80% or more, and even more preferably 90% or more, or may be 100%, based on the total number of units (100%) of all the structural units in the polyamide.

In the polyamide, the content of the structural unit represented by the above formula (1) wherein Ar¹ represents a 1,4-phenylene group, and p is 9 or 10 is preferably 40% or more, more preferably 80% or more, and even more preferably 90% or more, or may be 100%, based on the total number of units (100%) of all the structural units in the polyamide.

In the polyamide, the content of the structural unit represented by the above formula (1) wherein Ar¹ represents a 1,4-phenylene group, and p is 10 is preferably 40% or more, more preferably 80% or more, and even more preferably 90% or more, or may be 100%, based on the total number of units (100%) of all the structural units in the polyamide.

The melt mass flow rate (MFR) of the semi-aromatic polyamide, as measured in accordance with JIS K 7210 at a test temperature of 330°C with a load of 2160 g, is preferably 150 g/10 min or less, more preferably 125 g/10 min or less, and even more preferably 100 g/10 min or less.

As another aspect, the melt mass flow rate (MFR) of the semi-aromatic polyamide, as measured in accordance with JIS K 7210 at a test temperature of 330°C with a load of 2160 g, is preferably 80 g/10 min or less, more preferably 50 g/10 min or less, and even more preferably 30 g/10 min or less.

The resin composition containing a semi-aromatic polyamide having an MFR of equal to or less than the above upper limit value can exhibit even more excellent toughness.

The melt mass flow rate (MFR) of the semi-aromatic polyamide, as measured in accordance with JIS K 7210 at a test temperature of 330°C with a load of 2160 g, may be 5 g/10 min or more, may be 10 g/10 min or more, or may be 15 g/10 min or more.

The above-exemplified upper limit values and lower limit values of the melt mass flow rate (MFR) of the semi-aromatic polyamide can be freely combined.

The melt mass flow rate (MFR) of the semi-aromatic polyamide, as measured in accordance with JIS K 7210 at a test temperature of 330°C with a load of 2160 g, may be 5 g/10 min or more and 150 g/10 min or less, may be 10 g/10 min or more and 125 g/10 min or less, or may be 15 g/10 min or more and 100 g/10 min or less, as an example.

As another aspect, the melt mass flow rate (MFR) of the semi-aromatic polyamide, as measured in accordance with JIS K 7210 at a test temperature of 330°C with a load of 2160 g, may be 5 g/10 min or more and 80 g/10 min or less, may be 10 g/10 min or more and 50 g/10 min or less, or may be 15 g/10 min or more and 30 g/10 min or less, as an example.

The MFR of the semi-aromatic polyamide can be controlled, for example, by appropriately adjusting the conditions relating to the reaction efficiency of the polymerization reaction, such as raw material monomers, a catalyst, and reaction time for example.

As an example of the resin composition of an embodiment, there is exemplified a resin composition containing a resin obtained by adding a carbodiimide to a semi-aromatic polyamide, wherein the semi-aromatic polyamide is a semi-aromatic polyamide having a structural unit represented by the above formula (1), the proportion of the amount of the semi-aromatic polyamide blended based on the total mass (100% by mass) of the resin composition may be 50% by mass or more, and 0.05 parts by mass or more and 0.5 parts by mass or less of the carbodiimide is added based on 100 parts by mass of the semi-aromatic polyamide in the resin composition.

In the resin composition of an embodiment, the proportion of the amount of the semi-aromatic polyamide blended based on the total mass (100% by mass) of the resin composition may be 50% by mass or more, may be 50% by mass or more and 99.99% by mass or less, may be 70% by mass or more and 99.90% by mass or less, may be 80% by mass or more and 99.90% by mass or less, or may be 90% by mass or more and 99.90% by mass or less.

### <Carbodiimide>

The carbodiimide to be used for the resin composition of the present embodiment is not particularly limited as long as it is one having a carbodiimide group (represented by -N=C=N-) in the molecule, may be a monocarbodiimide having one carbodiimide group in the molecule, or may be a polycarbodiimide having two or more carbodiimide groups in the molecule.

The carbodiimide may be an aromatic carbodiimide or may be an aliphatic carbodiimide. In addition, the carbodiimide may be an aromatic monocarbodiimide, may be an aliphatic monocarbodiimide, may be an aromatic polycarbodiimide, or may be an aliphatic polycarbodiimide. From the viewpoint of having high reactivity with the polyamide, the carbodiimide is preferably an aliphatic polycarbodiimide.

Examples of the above aromatic polycarbodiimide include a polymer containing, in the main chain, a repeating structure formed by a carbodiimide group and an aromatic hydrocarbon. Examples of the above aliphatic polycarbodiimide include a polymer containing, in the main chain, a repeating structure formed by a carbodiimide group and a non-aromatic hydrocarbon.

The repeating structure formed by a carbodiimide group and an aromatic hydrocarbon group can contain a divalent aromatic hydrocarbon group. Examples of the divalent aromatic hydrocarbon group include divalent aryl groups such as a phenylene group, a naphthylene group, and a biphenylene group, and a divalent aromatic hydrocarbon group having 6 to 14 carbon atoms is preferred. One or more hydrogen atoms of the aromatic hydrocarbon group may be each independently substituted with a halogen atom, an alkyl group having 1 to 12 carbon atoms, or an alkoxy group having 1 to 12 carbon atoms.

The repeating structure formed by a carbodiimide group and a non-aromatic hydrocarbon can contain a divalent aliphatic hydrocarbon group. The divalent aliphatic hydrocarbon group may have a structure of any of a linear, branched, or cyclic structure. Examples of the divalent aliphatic hydrocarbon group include a divalent saturated aliphatic hydrocarbon group such as an alkylene group and a divalent alicyclic hydrocarbon group such as a cycloalkylene group, and a plurality of these structures may be contained. The divalent saturated aliphatic hydrocarbon group is preferably a divalent saturated aliphatic hydrocarbon group having 1 to 20 carbon atoms. The divalent alicyclic hydrocarbon group is preferably a divalent alicyclic hydrocarbon group having 3 to 20 carbon atoms.

Examples of the alkylene group include a methylene group, an ethylene group, a propylene group, a butylene group, a pentylene group, and a hexylene group. Examples of the cycloalkylene group include a cyclopropylene group, a cyclobutylene group, a cyclopentylene group, and a cyclohexylene group.

The aliphatic polycarbodiimide may be linear or branched, or may be cyclic (also referred to as alicyclic series polycarbodiimide or alicyclic polycarbodiimide.)

From the viewpoint that the effect of improving the durability due to the addition of the carbodiimide is more excellent, the aliphatic polycarbodiimide is preferably linear or branched.

Examples of commercially available aliphatic polycarbodiimides include CARBODILITE (R) HMV-15CA (manufactured by Nisshinbo Chemical Inc.), CARBODILITE HMV-8CA (manufactured by Nisshinbo Chemical Inc.), CARBODILITE LA-1 (manufactured by Nisshinbo Chemical Inc.), CARBODILITE V-02B (manufactured by Nisshinbo Chemical Inc.), CARBODILITE V-03 (manufactured by Nisshinbo Chemical Inc.), CARBODILITE V-04K (manufactured by Nisshinbo Chemical Inc.), CARBODILITE V-07 (manufactured by Nisshinbo Chemical Inc.), CARBODILITE V-09 (manufactured by Nisshinbo Chemical Inc.), CARBODILITE 10M-SP (manufactured by Nisshinbo Chemical Inc.), and Carbosista (R) TCC-NP (manufactured by TEIJIN LIMITED).

Examples of commercially available aromatic polycarbodiimides include STABAXOL (R) P (manufactured by LANXESS AG), STABAXOL P100 (manufactured by LANXESS AG), STABAXOL P400 (manufactured by LANXESS AG), STABAXOL I (manufactured by LANXESS AG), and CARBODILITE V-05 (manufactured by Nisshinbo Chemical Inc.).

The carbodiimide can be obtained, as an example, by decarboxylation of an isocyanate, such as an aromatic diisocyanate or an aliphatic diisocyanate, having a structure corresponding to a carbodiimide to be used for the resin composition of an embodiment.

Examples of the isocyanate include hexamethylene diisocyanate, cyclohexane-1,4-diisocyanate, isophorone diisocyanate, dycyclohexylmethane-4,4'-diisocyanate, dicyclohexylbutane-4,4'-diisocyanate, and methylcyclohexane diisocyanate.

The molar mass of the carbodiimide to be used for the resin composition of the present embodiment may be 300 g/mol or more and 10000 g/mol or less, may be 500 g/mol or more and 9000 g/mol or less, may be 500 g/mol or more and 6500 g/mol or less, or may be 1000 g/mol or more and 8000 g/mol or less.

The carbodiimide group equivalent of the carbodiimide to be used for the resin composition of the present embodiment may be 100 g/mol or more and 1000 g/mol or less, may be 150 g/mol or more and 600 g/mol or less, or may be 230 g/mol or more and 280 g/mol or less.

As the resin composition of the present embodiment, there is exemplified a resin composition containing a resin obtained by adding a carbodiimide to a semi-aromatic polyamide, wherein: the semi-aromatic polyamide is a semi-aromatic polyamide having a structural unit represented by the above formula (1) [wherein Ar¹ represents a phenylene group or a naphthylene group, a plurality of Ar¹s of the semi-aromatic polyamide are the same as or different from one another, and p is an integer of 4 to 12]; 0.05 parts by mass or more and 0.5 parts by mass or less of the carbodiimide is added based on 100 parts by mass of the semi-aromatic polyamide in the resin composition; the semi-aromatic polyamide has a melt mass flow rate (MFR) of 100 g/10 min or less, as measured in accordance with JIS K 7210 at a test temperature of 330°C with a load of 2160 g; and the carbodiimide has a carbodiimide group equivalent of 100 g/mol or more and 1000 g/mol or less.

As the resin composition of another embodiment, there is exemplified a resin composition containing a resin obtained by adding a carbodiimide to a semi-aromatic polyamide, wherein: the semi-aromatic polyamide is, among the semi-aromatic polyamides having a structural unit represented by the above formula (1), a semi-aromatic polyamide, wherein Ar¹ represents a phenylene group or a naphthylene group, a plurality of Ar¹s of the semi-aromatic polyamide are the same as or different from one another, and p is 9 or 10, preferably 10; 0.15 parts by mass or more and 0.45 parts by mass or less, preferably 0.2 parts by mass or more and 0.4 parts by mass or less, of the carbodiimide is added based on 100 parts by mass of the semi-aromatic polyamide in the resin composition; the semi-aromatic polyamide has a melt mass flow rate (MFR) of 15 g/10 min or more and 30 g/10 min or less, as measured in accordance with JIS K 7210 at a test temperature of 330°C with a load of 2160 g; and the carbodiimide has a carbodiimide group equivalent of 230 g/mol or more and 280 g/mol or less.

### (Optional components)

The resin composition of the present embodiment may contain optional components that do not correspond to any of the semi-aromatic polyamide, the carbodiimide, and reaction products thereof in a range where the effects of the present invention are not impaired.

Examples of the optional components include a filler or an additive, and, in addition, a resin that does not correspond to the semi-aromatic polyamide (hereinafter, sometimes referred to as "additional resin").

These optional components may be used singly or in combinations of two or more.

The filler may be a fibrous filler or a granular filler. In addition, the filler may be an inorganic filler or may be an organic filler.

Examples of the additive include a stabilizer, a release agent, an antioxidant, a heat stabilizer, an ultraviolet absorber, an antistatic agent, a surfactant, a flame retardant, and a colorant.

Examples of the additional resin include: thermoplastic resins such as polyester, polyphenylene sulfide, polyether ketone, polycarbonate, polyphenylene ether, polyetherimide, and a fluororesin; and thermosetting resins such as a phenol resin, an epoxy resin, a polyimide resin, and a cyanate resin.

According to the resin composition of the above-described embodiment, when the carbodiimide is added in the above predetermined amount, thereby the toughness and durability of a molded body of the resin composition are improved.

The reason why the toughness and durability of a molded body of the resin composition are improved when the carbodiimide is added in the above predetermined amount in the resin composition of the present embodiment is not clear in detail, but it is considered that the above toughness and durability are improved, for example, because the carboxyl group or amino group present at the terminal of the semi-aromatic polyamide and the carbodiimide group of the carbodiimide react to increase the molecular weight of the semi-aromatic polyamide.

The toughness relating to the resin composition can be evaluated, for example, using tensile energy to break measured for a test specimen in the following [Tensile test] as an index. The higher tensile energy to break, the better the toughness can be determined to be.

### [Tensile test]

An A1 type test specimen specified in ISO 3167 is obtained using the resin composition to be an object of measurement as a molding material and using an injection molding machine (for example, Electric high-performance injection molding machine NEX501V-5EG, manufactured by NISSEI PLASTIC INDUSTRIAL CO., LTD.) under injection conditions of cylinder temperatures of 335°C at the nozzle, 330°C in the front zone, 320°C in the middle zone, and 315°C in the rear zone, a metal mold temperature of 120°C, a back pressure of 8 MPa, a number of screw revolutions of 100 rpm, an injection speed of 26 mm/second, an injection pressure of 90 MPa, an injection time of 2 seconds, a dwelling pressure of 80 MPa, and a cooling time of 30 seconds. The tensile stress at break (MPa), tensile strain at break (%), and tensile energy to break (J) in an atmosphere of 23°C and a relative humidity of 50% are measured for this test specimen in accordance with ISO 527 at a test speed of 5 mm/min. TENSILON Universal Testing Instrument (for example, RTG-1310, manufactured by A&D Company, Limited) is used for the measurement. The measurement is conducted for 5 samples, and the average value is used.

For example, the tensile energy to break of the resin composition of an embodiment, as measured for the test specimen, may be 20 J or more, may be 30 J or more, may be 30 J or more and 200 J or less, or may be 40 J or more and 150 J or less.

The durability relating to the resin composition can be evaluated, for example, using the number of times of tension until the test specimen is broken, measured for the test specimen in the following [Fatigue test], as an index. The larger the number of times, the better the durability can be determined to be.

### [Fatigue test]

A test specimen (thickness: 2.5 mm) in accordance with JIS K 7118 is obtained using a pellet of the resin composition to be an object of measurement as a molding material and using an injection molding machine (for example, Injection Molding Machine SE100EV-A, manufactured by Sumitomo Heavy Industries, Ltd.) under injection conditions of cylinder temperatures of 340°C at the nozzle, 330°C in the front zone, 330°C in the middle zone, and 320°C in the rear zone, a metal mold temperature of 120°C, a back pressure of 6 MPa, a number of screw revolutions of 100 rpm, an injection speed of 50 mm/second, an injection pressure of 130 MPa, an injection time of 0.86 seconds, a dwelling pressure of 90 MPa, and a cooling time of 60 seconds. A tensile fatigue test in accordance with JIS K 7118 is conducted in an atmosphere of a test temperature of 23°C and a relative humidity of 50% for this test specimen using a hydraulic servo strength testing machine (for example, trade name: Hydraulic Tabletop Servopulser, EHF-LV010K1A-010-0, manufactured by SHIMADZU CORPORATION) under conditions of a stress ratio of 0.2, a frequency of 10 Hz, a distance between chucks of 50 mm, and a waveform: a sine wave. The measurement is conducted for 10 samples to employ the average value.

As for the resin composition of an embodiment, the number of times of tension, measured for the test specimen at a tensile stress of 40 MPa, may be, for example, 2.0 × 10⁶ or more, may be 2.5 × 10⁶ or more and 5.0 × 10⁷ or less, may be 3.0 × 10⁶ or more and 1.0 × 10⁷ or less, may be 3.0 × 10⁶ or more and 7.0 × 10⁶ or less, or may be 3.0 × 10⁶ or more and 6.0 × 10⁶ or less.

The above toughness and durability of the resin composition are improved, and therefore the resin composition is suitable as a resin composition to be used as a molding material for a mechanical component such as a gear and is particularly suitable as a resin composition for molding a gear, to be used as a molding material for a gear.

### <<Method for producing resin composition>>

A method for producing a resin composition of an embodiment includes mixing a semi-aromatic polyamide and a carbodiimide.

According to the method for producing a resin composition of the present embodiment, it is possible to produce the resin composition of the above-described embodiment.

The resin composition of an embodiment can be obtained by mixing the above-described semi-aromatic polyamide, carbodiimide, and other optional components to be used as necessary, all at once or in an appropriate order.

The mixing is preferably melt kneading. The resin composition of the present embodiment can be provided in the form of a pellet by melt-kneading the semi-aromatic polyamide, the carbodiimide, and the other optional components to be used as necessary, using, for example, an extruder.

Examples of the semi-aromatic polyamide, the carbodiimide, and the other components include those described in the above <<Resin composition>>.

Examples of the blending proportion for mixing the respective components include the amounts of the components described in the above <<Resin composition>>.

As an example of the method for producing a resin composition of an embodiment, there can be exemplified, for example, a production method including mixing a semi-aromatic polyamide and a carbodiimide, wherein the semi-aromatic polyamide is a semi-aromatic polyamide having a structural unit represented by the following formula (1), the amount of the carbodiimide to be blended is 0.05 parts by mass or more and 0.5 parts by mass or less based on 100 parts by mass of the semi-aromatic polyamide in the resin composition. 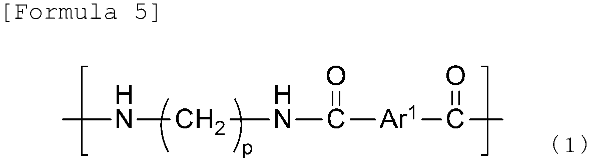 wherein Ar¹ represents a phenylene group or a naphthylene group, a plurality of Ar¹s of the semi-aromatic polyamide are the same as or different from one another, and p is an integer of 4 to 12.

The resin composition thus obtained, particularly a pellet of the resin composition, can be used suitably as a molding material for a molded body which will be described later.

Note that the resin composition of an embodiment includes both the states before solidification and after solidification. According to the resin composition after solidification (solidified product of the resin composition), a molded body of an embodiment can be formed.

### <<Molded body>>

A molded body of one embodiment of the present invention contains the resin composition of the above embodiment.

As the molded body of an embodiment, a molded body composed of the resin composition of an embodiment can be given as an example.

As the molded body of an embodiment, a molded body molded from the resin composition of the above embodiment can be given as an example.

The molding method from the resin composition to the molded body is not particularly limited, but melt molding is preferred, and examples thereof include extrusion molding, T-die molding, blow molding, and injection molding, and the resin composition can be molded into a shape of a desired molded body by selecting a molding method according to the shape and the like of the molded body.

The molded body of the present embodiment can be applied to all uses to which a resin composition can be generally applied.

Examples of the molded body of the present embodiment include electrical and electronic components such as connectors, sockets, relay components, coil bobbins, optical pickups, oscillators, printed wiring boards, circuit boards, semiconductor packages, and computer-related components; semiconductor production process-related components such as IC trays and wafer carriers; home electric appliance components such as VTRs, televisions, irons, air conditioners, stereos, vacuum cleaners, refrigerators, rice cookers, and lighting apparatus; lighting apparatus components such as lamp reflectors and lamp holders; audio product components such as compact discs, laser disc (R), and speakers; communication device components such as ferrules for optical cables, telephone components, facsimile components, and modems; copier or printer-related components such as separation claws and heater holders; machine components such as impellers, fan gears, gears, bearings, and motor components and cases; automobile components such as automobile mechanism components, engine components, components in an engine room, electrical components, and interior components; cooking utensils such as microwave cooking pots and heat-resistant tableware; heat insulating or soundproofing materials such as floor materials and wall materials, support materials such as beams and columns, and building materials such as roof materials, or materials for civil engineering and construction; components for aircraft, spacecraft, or space devices; radiation facility members such as nuclear reactors, marine facility members, cleaning jigs, optical device components, valves, pipes, nozzles, filters, membranes, medical device components and medical materials, components for sensors, sanitary fixtures, sporting goods, leisure equipment, and binding bands.

The molded body of an embodiment has improved toughness and durability, and therefore is suitable as a mechanical component such as a gear and can be provided and used suitably as a gear in particular.

Examples of the type of the gear include, but are not particularly limited to, a spur gear, a helical gear, a rack, an internal gear, a worm gear, a worm wheel gear, a bevel gear, and a hypoid gear.

In the past, a resin composition itself containing a resin obtained by adding a carbodiimide to a polyamide has been known. However, it has not been known that in a resin composition in which a carbodiimide is added in a smaller amount than before to a semi-aromatic polyamide (0.05 parts by mass or more and 0.5 parts by mass or less based on 100 parts by mass of the semi-aromatic polyamide), remarkable effects of improving the toughness and durability of a molded body are obtained.

According to the present embodiment described above, it is possible to provide a resin composition that contains a semi-aromatic polyamide and makes it possible to produce a molded body having improved toughness and durability, and a molded body of the resin composition.

### Examples

Next, the present invention will be described in more detail with reference to Examples, but the present invention is not limited to the following Examples.

### <<Measurement>>

### [Melt mass flow rate (MFR) of polyamide]

The melt mass flow rate (MFR) of the polyamide was measured in accordance with JIS K 7210 at a test temperature of 330°C with a load of 2160 g using an MFR measurement apparatus (Melt Indexer G-01, manufactured by Toyo Seiki Seisaku-sho, Ltd.).

### [Tensile test]

An A type test specimen specified in ISO 3167 was obtained using a pellet of each of the resin compositions obtained in Examples and Comparative Examples as a molding material and using an injection molding machine (Electric high-performance injection molding machine NEX501V-5EG, manufactured by NISSEI PLASTIC INDUSTRIAL CO., LTD.) under injection conditions of cylinder temperatures of 335°C at the nozzle, 330°C in the front zone, 320°C in the middle zone, and 315°C in the rear zone, a metal mold temperature of 120°C, a back pressure of 8 MPa, a number of screw revolutions of 100 rpm, an injection speed of 26 mm/second, an injection pressure of 90 MPa, an injection time of 2 seconds, a dwelling pressure of 80 MPa, and a cooling time of 30 seconds. The tensile stress at break (MPa), tensile strain at break (%), and tensile energy to break (J) in an atmosphere of 23°C and a relative humidity of 50% were measured for this test specimen in accordance with ISO 527 at a test speed of 5 mm/min. TENSILON Universal Testing Instrument (RTG-1310, manufactured by A&D Company, Limited) was used for the measurement. Note that the measurement was conducted for 5 samples to determine the average value.

### [Fatigue test]

A test specimen (thickness: 2.5 mm) in accordance with JIS K 7118 was obtained using a pellet of each of the resin compositions obtained in Examples and Comparative Examples as a molding material and using an injection molding machine (Injection Molding Machine SE100EV-A, manufactured by Sumitomo Heavy Industries, Ltd.) under injection conditions of cylinder temperatures of 340°C at the nozzle, 330°C in the front zone, 330°C in the middle zone, and 320°C in the rear zone, a metal mold temperature of 120°C, a back pressure of 6 MPa, a number of screw revolutions of 100 rpm, an injection speed of 50 mm/second, an injection pressure of 130 MPa, an injection time of 0.86 seconds, a dwelling pressure of 90 MPa, and a cooling time of 60 seconds. A tensile fatigue test in accordance with JIS K 7118 was conducted at a tensile stress (40 MPa or 75 MPa) described in each table in an atmosphere of a test temperature of 23°C and a relative humidity of 50% for this test specimen using a hydraulic servo strength testing machine (trade name: Hydraulic Tabletop Servopulser, EHF-LV010K1A-010-0, manufactured by SHIMADZU CORPORATION) under conditions of a stress ratio of 0.2, a frequency of 10 Hz, a distance between chucks of 50 mm, and a waveform: a sine wave. The measurement was conducted for 10 samples to determine the average value.

### <<Production of resin composition>>

### <Raw materials>

- Base resin: Polyamide
   PA10T (semi-aromatic polyamide having structural unit represented by the above formula (1), wherein Ar¹ represents 1,4-phenylene group and p is 10, MFR: 24 g/10 min)
   PA46 (aliphatic polyamide, MFR: cannot be measured because of high value)
   PA9T (semi-aromatic polyamide having structural unit represented by the above formula (1), wherein Ar¹ represents 1,4-phenylene group and p is 9, MFR: 20 g/10 min)
- Carbodiimide
   Aliphatic polycarbodiimide (CARBODILITE HMV-15CA, manufactured by Nisshinbo Chemical Inc., polydicyclohexylbutane carbodiimide, molar mass: 5327 g/mol, carbodiimide group equivalence: 262 g/mol)
   Aliphatic polycarbodiimide (CARBODILITE LA-1, manufactured by Nisshinbo Chemical Inc., polydicyclohexylmethane carbodiimide, molar mass: 6000 g/mol, carbodiimide group equivalent: 247 g/mol)
   Alicyclic polycarbodiimide (Carbosista TCC-NP, manufactured by TEIJIN LIMITED, molar mass: 516 g/mol, carbodiimide group equivalent: 256 g/mol)

### [Examples 1 to 7 and Comparative Examples 1 to 8]

In a twin-screw extruder, a polyamide and a carbodiimide of types described in each table of Tables 1 to 5 were charged at a blending ratio (parts by mass) described in each table to perform melt kneading at a preset cylinder temperature of 330°C and a number of screw revolutions of 150 rpm under deaeration. The resulting kneaded product was discharged in a strand shape through a circular nozzle (discharge port) and subsequently pelletized with a strand cutter, and thus pellet-shaped resin compositions of Examples and Comparative Examples were obtained.

The results of the above measurements are shown in Tables 1 to 5.

**[Table 1]**

| | | | | Comparative Example 1 | Example1 | Example2 | Comparative Example 2 | Comparative Example 3 |
|---|---|---|---|---|---|---|---|---|
| Raw materials | Semi-aromatic polyamide | PA10T | Parts by mass | 100 | 100 | 100 | 100 | 100 |
| | Aliphatic polycarbodiimide | HMV-15CA | Parts by mass | 0 | 0.2 | 0.4 | 0.8 | 2.0 |
| Measurements | Tensile test | Tensile stress at break | MPa | 81 | 64 | 67 | 79 | 71 |
| | | Tensile strain at break | % | 7.6 | 19 | 20 | 9.4 | 4.3 |
| | | Tensile energy to break | J | 19.8 | 59.2 | 59.7 | 23.7 | 8.2 |
| | Fatigue test | Number of times of tension before breakage (tensile stress: 40 MPa) | Times | 1.6×10⁶ | 3.5×10 | 5.0×10⁶ | 2.7×10⁶ | 1.6×10⁵ |

**[Table 2]**

| | | | | Comparative Example 1 | Example3 | Example4 | Comparative Example 4 |
|---|---|---|---|---|---|---|---|
| Raw materials | Semi-aromatic polyamide | PA10T | Parts by mass | 100 | 100 | 100 | 100 |
| | Alicyclic polycarbodiimide | TCC-NP | Parts by mass | 0 | 0.2 | 0.4 | 0.8 |
| Measurements | Tensile test | Tensile stress at break | MPa | 81 | 64 | 62 | 79 |
| | | Tensile strain at break | % | 7.6 | 22 | 26 | 6.2 |
| | | Tensile energy to break | J | 19.8 | 68 | 76 | 14.4 |
| | Fatigue test | Number of times of tension before breakage (tensile stress: 40 MPa) | Times | 1.6×10⁶ | 4.9×10⁶ | 6.1×10⁶ | 1.8×10⁶ |

**[Table 3]**

| | | | | Comparative Example 1 | Example5 | Example6 |
|---|---|---|---|---|---|---|
| Raw materials | Semi-aromatic polyamide | PA10T | Parts by mass | 100 | 100 | 100 |
| | Aliphatic polycarbodiimide | LA-1 | Parts by mass | 0 | 0.2 | 0.4 |
| Measurements | Tensile test | Tensile stress at break | MPa | 81 | 64 | 66 |
| | | Tensile strain at break | % | 7.6 | 39 | 45 |
| | | Tensile energy to break | J | 19.8 | 119.1 | 134.4 |
| | Fatigue test | Number of times of tension before breakage (tensile stress: 40 MPa) | Times | 1.6×10⁶ | 3.3×10⁶ | 2.8×10⁶ |

**[Table 4]**

| | | | | Comparative Example5 | Example7 |
|---|---|---|---|---|---|
| Raw materials | Semi-aromatic polyamide | PA9T | Parts by mass | 100 | 100 |
| | Aliphatic polycarbodiimide | LA-1 | Parts by mass | 0 | 0.2 |
| Measurements | Tensile test | Tensile stress at break | MPa | 80 | 79 |
| | | Tensile strain at break | % | 5 | 8 |
| | | Tensile energy to break | J | 11 | 230 |
| | Fatigue test | Number of times of tension before breakage (tensile stress: 40 MPa) | Times | 1.8 × 10⁶ | 2.3 × 10⁶ |

**[Table 5]**

| | | | | Comparative Example 6 | Comparative Example 7 | Comparative Example 8 |
|---|---|---|---|---|---|---|
| Raw materials | 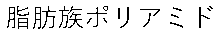 | PA46 | Parts by mass | 100 | 100 | 100 |
| | Aliphatic polycarbodiimide | LA-1 | Parts by mass | 0 | 0.4 | 0.8 |
| Measurements | Tensile test | Tensile stress at break | MPa | 87 | 81 | 83 |
| | | Tensile strain at break | % | 45 | 49 | 49 |
| | | Tensile energy to break | J | 166.1 | 170.0 | 167.2 |
| | Fatigue test | Number of times of tension before breakage (tensile stress: 40 MPa) | Times | 2.1×10³ | 2.1×10³ | 1.3×10³ |

Referring to Table 1, in Examples 1 to 2, in which the aliphatic polycarbodiimide (CARBODILITE HMV-15CA) was added within the range of 0.05 parts by mass or more and 0.5 parts by mass or less based on 100 parts by mass of the semi-aromatic polyamide (PA10T), the toughness using the tensile energy to break as an index was improved and the durability which was checked by the fatigue test was also improved, as compared with Comparative Example 1, in which the aliphatic polycarbodiimide was not added.

On the other hand, in Comparative Examples 2 to 3, in which more than 0.5 parts by mass of the aliphatic polycarbodiimide (CARBODILITE HMV-15CA) was added based on 100 parts by mass of the semi-aromatic polyamide (PA10T), the degree of improvement in toughness and durability was confirmed to be inferior to that in Examples 1 to 2.

In addition, as shown in Table 2 to Table 3, the same results were confirmed when the alicyclic polycarbodiimide (Carbosista TCC-NP) or the aliphatic polycarbodiimide (CARBODILITE LA-1) was used in place of the aliphatic polycarbodiimide (CARBODILITE HMV-15CA).

As shown in Table 4, the same results were also confirmed when the semi-aromatic polyamide (PA9T) was used in place of the semi-aromatic polyamide (PA10T).

However, referring to Table 5, in Comparative Examples 6 to 8, in which the aliphatic polyamide (PA46) was used in place of the semi-aromatic polyamide (PA10T), remarkable improvement in toughness and durability was not confirmed.

From the above results, it was shown that when the carbodiimide is added within the range of 0.05 parts by mass or more and 0.5 parts by mass or less based on 100 parts by mass of the semi-aromatic polyamide, thereby the toughness and durability of the resin composition can be improved satisfactorily.

Each configuration in each embodiment, a combination thereof, and the like are examples, and addition, omission, substitution of a configuration, and other modifications of a configuration are possible unless they depart from the scope of the present invention. In addition, the present invention is not limited by each embodiment but is limited only by the claims.

## Claims

1. A resin composition comprising a resin obtained by adding a carbodiimide to a semi-aromatic polyamide,
wherein the semi-aromatic polyamide is a semi-aromatic polyamide having a structural unit represented by the following formula (1),
0.05 parts by mass or more and 0.5 parts by mass or less of the carbodiimide is added based on 100 parts by mass of the semi-aromatic polyamide in the resin composition: 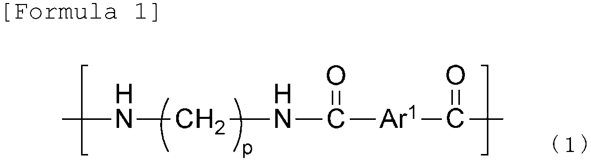
wherein Ar¹ represents a phenylene group or a naphthylene group, a plurality of Ar¹s of the semi-aromatic polyamide are the same as or different from one another, and p is an integer of 4 to 12.

2. The resin composition according to claim 1, wherein the carbodiimide is an aliphatic polycarbodiimide.

3. The resin composition according to claim 1 or 2, wherein in formula (1), Ar¹ represents a 1,4-phenylene group and p is 10.

4. The resin composition according to claim 1 or 2, wherein the semi-aromatic polyamide has a melt mass flow rate (MFR) of 150 g/10 min or less, as measured in accordance with JIS K 7210 at a test temperature of 330°C with a load of 2160 g.

5. The resin composition according to claim 1 or 2, wherein the carbodiimide has a carbodiimide group equivalent of 100 g/mol or more and 1000 g/mol or less.

6. The resin composition according to claim 1 or 2, being a resin composition for molding a gear, to be used as a molding material for a gear.

7. A molded body comprising the resin composition according to claim 1 or 2.

8. A method for producing the resin composition according to claim 1 or 2, the method comprising mixing a semi-aromatic polyamide and a carbodiimide,
wherein the semi-aromatic polyamide is a semi-aromatic polyamide having a structural unit represented by the following formula (1); and
an amount of the carbodiimide blended is 0.05 parts by mass or more and 0.5 parts by mass or less based on 100 parts by mass of the semi-aromatic polyamide in the resin composition: 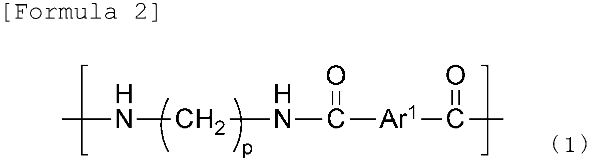
wherein Ar¹ represents a phenylene group or a naphthylene group, a plurality of Ar¹s of the semi-aromatic polyamide are the same as or different from one another, and p is an integer of 4 to 12.
